# EUROPEAN PATENT SPECIFICATION

(11) **EP 2 479 761 B1**
(45) Date of publication and mention of the grant of the patent: **22.04.2015**
(21) Application number: 12152020.9
(22) Date of filing: 20.01.2012
(51) Int. Cl.: G21C 19/10, G21C 19/18, G21C 19/20, B66D 1/50, B66D 1/44, B66D 1/58

(54) **Load compensating device for a nuclear fuel element handling machine**
Ladungskompensationsvorrichtung für eine Maschine zur Handhabung von Kernbrennstoffelementen
Dispositif de compensation de charge pour machine de manipulation d'élément de combustible nucléaire

(30) Priority: 20.01.2011 IT MI20110054
(43) Date of publication of application: 25.07.2012
(73) Proprietor: Ansaldo Nucleare S.p.A., Genova (IT)
(72) Inventor: Orzelli, Francesco, 17025 LOANO (IT)
(74) Representative: Bergadano, Mirko

(56) References cited:
- FR-A1- 2 764 591
- US-A- 4 177 973
- US-A- 4 493 479
- US-A- 4 886 174
- US-A- 6 068 240

## Description

The present invention relates to a load compensating device for a nuclear reactor fuel element handling machine.

More specifically, the invention relates to a device for compensating the load generated on the nuclear fuel element by the handling machine pickup device, by limiting both compression caused by the weight of the pickup device itself, and pull caused by the fuel element sticking to the base plate of the reactor and/or adjacent elements.

A nuclear fuel element handling machine, particularly for PWR reactors, normally comprises a main structure (telescopic mast), in turn comprising a movable pickup device with a gripper for engaging individual fuel elements; and a number of removable accessory structures. The mass of the pickup device therefore varies, so a load compensating system is needed to compensate the forces exchanged with the fuel element alongside variations in the mass of the pickup device.

Various types of compensating systems are known, but all leave room for improvement, particularly in terms of easy manufacture and operation, efficiency, and reliability.

Each of US6068240 and US4886174 discloses a load compensating system having two fluid-operated piston devices, connected mechanically in series to each other and to a slide connected, in use, to a fuel elements gripper; and an operating fluid feed circuit for parallel-feeding operating fluid to the piston devices.

It is an object of the present invention to provide a load compensating device, for a nuclear fuel element handling machine, which is easy to produce and operate, and highly efficient and reliable.

According to the present invention, there is provided a load compensating device for a nuclear fuel element handling machine, as defined substantially in the attached Claim 1, and in more detail in the dependent Claims.

The load compensating device according to the invention provides for easily, effectively, and reliably compensating the load generated on the nuclear fuel element by the handling machine pickup device, by limiting both compression caused by the weight of the pickup device itself, and pull caused by the fuel element sticking to the base plate of the reactor and/or adjacent elements.

A non-limiting embodiment of the present invention will be described by way of example with reference to the accompanying drawings, in which :
Figure 1 shows a schematic of a nuclear reactor fuel element handling machine featuring a load compensating device in accordance with the present invention;
Figure 2 shows a schematic of the load compensating device according to the invention in a first operating position;
Figures 3 and 4 show the Figure 2 device in further operating positions.

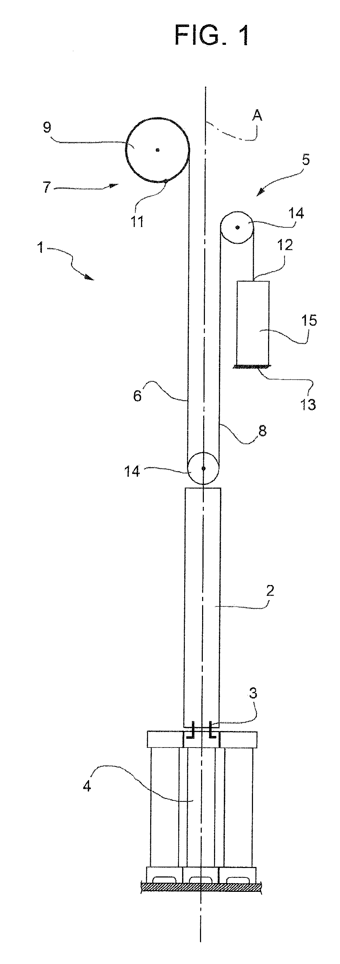

Number 1 in the Figure 1 schematic indicates as a whole a machine for handling nuclear reactor fuel elements.

Machine 1 comprises a pickup device 2 extending along a substantially vertical axis A and fitted at the bottom with a gripper 3 for engaging a fuel element 4; and a hoisting system 5, which acts on pickup device 2 to move it up and down along axis A. More specifically, hoisting system 5 comprises a flexible hoisting member 6, e.g. a cable, connected to pickup device 2; and a pull assembly 7 for moving hoisting member 6. In the non-limiting example shown, but not necessarily, member 6 is a cable 8, and pull assembly 7 comprises a winch 9 wound with cable 8. It is nevertheless understood that member 6 and hoisting system 5 as a whole may be of other types.

Other component parts of machine 1, for moving pickup device 2 horizontally and operating gripper 3 to selectively engage and release fuel element 4, are not shown for the sake of simplicity.

Cable 8 has a first end 11 attached to winch 9; and a second (fixed) end 12 connected to a fixed supporting structure 13. And guide members (pulleys) 14 are arranged to define an S-shaped path for cable 8 between winch 9 and structure 13.

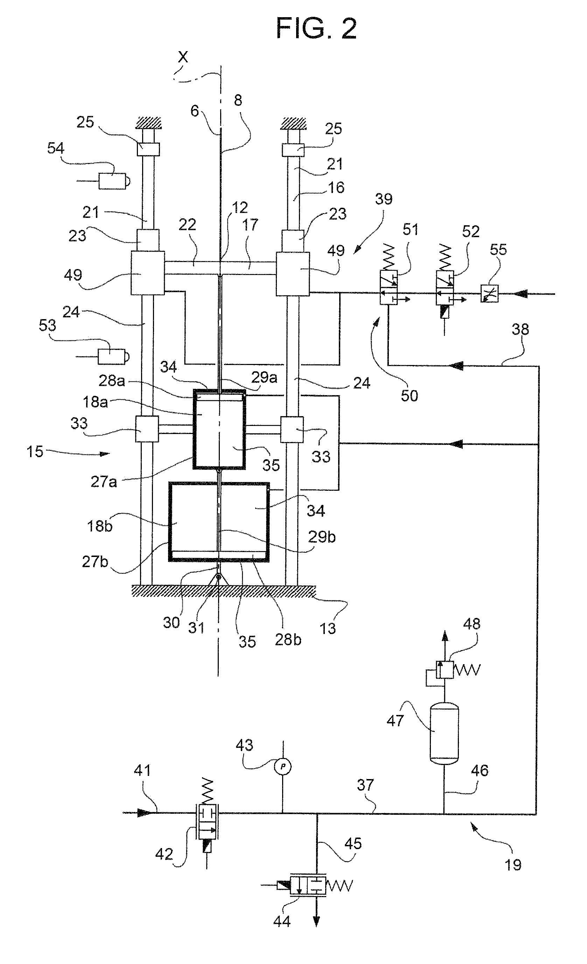

Cable 8 is connected to structure 13 by a load compensating device 15 shown in more detail in a rest position in Figure 2.

With reference to Figure 2, device 15 extends substantially along an axis X (vertical in use), and comprises : a frame 16 fixed to structure 13 and extending along axis X; a slide 17 fitted to frame 16, and which moves vertically along axis X with respect to frame 16; two fluid-operated piston devices 18 connected mechanically in series to each other and to slide 17; and an operating fluid feed circuit 19 for parallel-feeding operating fluid to piston devices 18.

Frame 16 comprises, for example, two (or more) vertical uprights 21 (parallel to axis X), and each connected at opposite longitudinal ends to structure 13.

Slide 17 comprises a beam 22 extending between uprights 21, and slides vertically on frame 16 (along or at any rate parallel to axis X) by means, for example, of bushings 23, which slide along respective guides 24 on uprights 21. Close to the top ends of uprights 21, guides 24 have stops 25 fitted optionally with shock absorbers.

Fixed end 12 of cable 8 (hoisting member 6) is fixed to, and projects from a top face of, slide 17.

The two piston devices 18 are aligned, one over the other, along axis X, between uprights 21, and beneath slide 17. More specifically, a first (top) device 18a is located between a second (bottom) device 18b and slide 17.

Each piston device 18 comprises a cylinder 27; and a piston 28, which slides inside cylinder 27 and has a rod 29 parallel to axis X. Pistons 28 and respective rods 29 are preferably aligned along axis X.

More specifically, load compensating device 15 comprises :
- a first (top) device 18a with a piston 28a, which slides inside a cylinder 27a and has a rod 29a connected at the top end to slide 17; and
- a second (bottom) device 18b with a piston 28b, which slides inside a cylinder 27b and has a rod 29b connected at the top end to cylinder 27a of first device 18a.

Piston devices 18 may be pneumatic or hydraulic - more specifically, oil-operated - depending on the operating fluid in cylinders 27. Hereinafter, reference is made, purely by way of example, to pneumatic devices (the operating fluid being compressed air).

Cylinder 27a of first (top) device 18a is free to slide vertically with respect to frame 16, e.g. like slide 17, along guides 24 and by means of further bushings 33, and is connected to structure 13 by second (bottom) device 18b. Cylinder 27b of second device 18b, on the other hand, does not slide with respect to frame 16, and is connected integrally to structure 13, e.g. by a connector 30 with a load sensor 31. More specifically, cylinder 27b of second (bottom) device 18b is fixed at the bottom to structure 13 by connector 30 and load sensor 31.

Inside respective cylinder 27, each piston 28 defines a top chamber 34 housing rod 29; and a bottom chamber 35. The top chambers 34 of cylinders 27 are connected to each other, and maintained at the same pressure, by circuit 19, which, in the example shown, is a pneumatic compressed-gas (compressed-air) circuit, but may equally be a hydraulic or oil circuit.

Circuit 19 comprises : a main branch 37 connecting a compressed operating fluid source (e.g. a compressor, not shown) to chambers 34; and a secondary branch 38 branching off from main branch 37 and connected to a safety lock system 39 (described below) operating on slide 17.

As of an inlet 41 connected to the operating fluid source, main branch 37 comprises a first control valve 42; a gauge 43; a second control valve 44 along a side branch 45; and another side branch 46 connected to a storage tank 47 with a safety valve 48. Chambers 34 are parallel-connected by main branch 37.

Control valves 42 and 44 are preferably (but not necessarily) proportional direction control valves, in particular, normally-closed, two-position, two-way valves.

Circuit 19 passively controls the pressure of devices 18 (more specifically, in chambers 34 of cylinders 27) : the pressure in circuit 19 is set at rest, and is not adjusted again by control valves 42, 44 during normal operation of device 15, as described in detail below.

Control valve 42 (when opened) serves to increase the pressure of circuit 19 by connecting it to the external compressor (not shown) or other compressed operating fluid source; and control valve 44 serves to reduce the pressure of circuit 19 : when control valve 44 is opened, the pressure of circuit 19 falls. Both valves 42, 44 are controlled by a control system (not shown for the sake of simplicity), which determines the pressure of circuit 19 by means of gauge 43, and adjusts the various pressure levels as required to operate device 15.

Storage tank 47 is designed to permit predetermined variations in the pressure of circuit 19 when device 15 is running; and normally-closed safety valve 48 opens when the pressure of circuit 19 exceeds a given threshold.

Safety lock system 39 selectively locks and releases slide 17 to disable and enable travel of slide 17 with respect to frame 16, and, in the example shown, comprises two, e.g. conical, locking devices 49 fitted to respective guides 24 and connected to respective sides of slide 17.

Each locking device 49 is normally closed in a lock position engaging guide 24 and connecting slide 17 integrally to frame 16, and is opened by an actuating device 50 into a release position allowing travel of slide 17 along guides 24.

In the example shown, actuating device 50 is fluid-operated, and comprises secondary branch 38 of circuit 19, and two auxiliary control valves 51, 52 along branch 38.

Locking devices 49 are kept open (in the release position) by the operating fluid (compressed air) in circuit 19, and are opened/closed by control valves 51, 52, as described below.

Device 15 also comprises two microswitches 53, 54 spaced vertically apart and facing frame 16, and which cooperate with the moving slide 17 to stop hoisting system 5 (more specifically, winch 9) when slide 17, during operation of device 15, reaches respective limit positions and selectively activates microswitch 53 or 54.

Load compensating device 15 operates as follows.

In the rest position shown in Figure 2, pickup device 2 is not attached to fuel element 4, so the tension of cable 8 is produced solely by, and substantially by the weight of, pickup device 2.

Top device 18a is configured (i.e. designed and supplied with operating fluid) to tension cable 8 in the opposite direction to pickup device 2, and so keep the tension of cable 8 above a given minimum value Tₘᵢₙ.

When pickup device 2 rests on fuel element 4 when engaging/releasing it, fuel element 4 is subjected to compression (equal to the difference between the weight of pickup device 2 and twice the tension of cable 8).

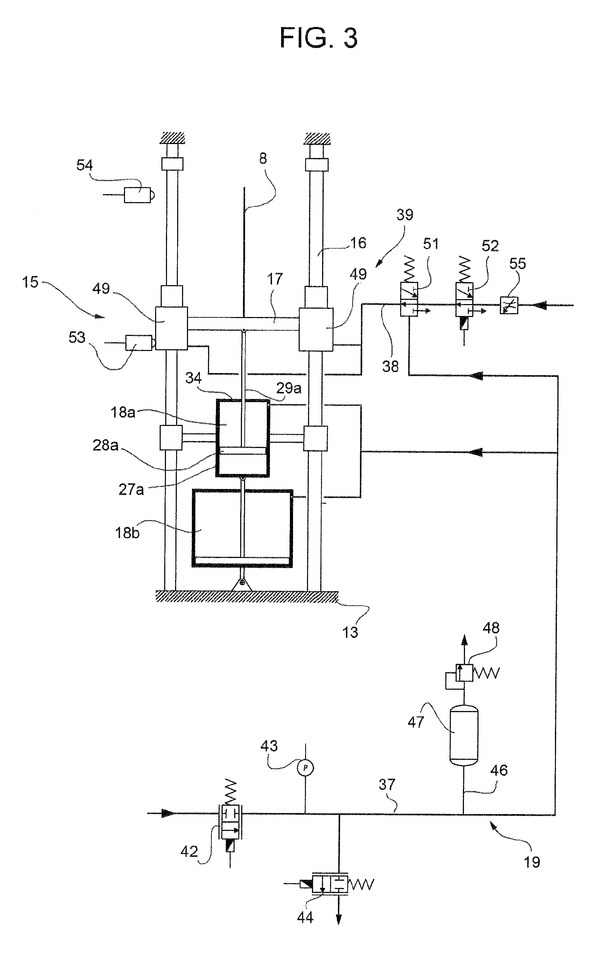

To prevent pickup device 2 from weighing excessively on fuel element 4, first (top) device 18a intervenes as shown in Figure 3 : piston 28a of device 18a is pushed down by the pressure in chamber 34, and maintains a residual tension on cable 8, equal to the fluid pressure times the area of cylinder 27a minus the area of rod 29a, to prevent the tension on cable 8 from falling below minimum value Tₘᵢₙ. By maintaining a tension of no less than Tₘᵢₙ on cable 8, compensating device 15 thus ensures compression on fuel element 4 is below the maximum permitted load, to avoid damaging fuel element 4.

Cylinder 27a of device 18a, on the other hand, remains stationary on frame 16.

Slide 17 is drawn down by piston 28a and eventually activates microswitch 53, which stops hoisting system 5, i.e. winch 9.

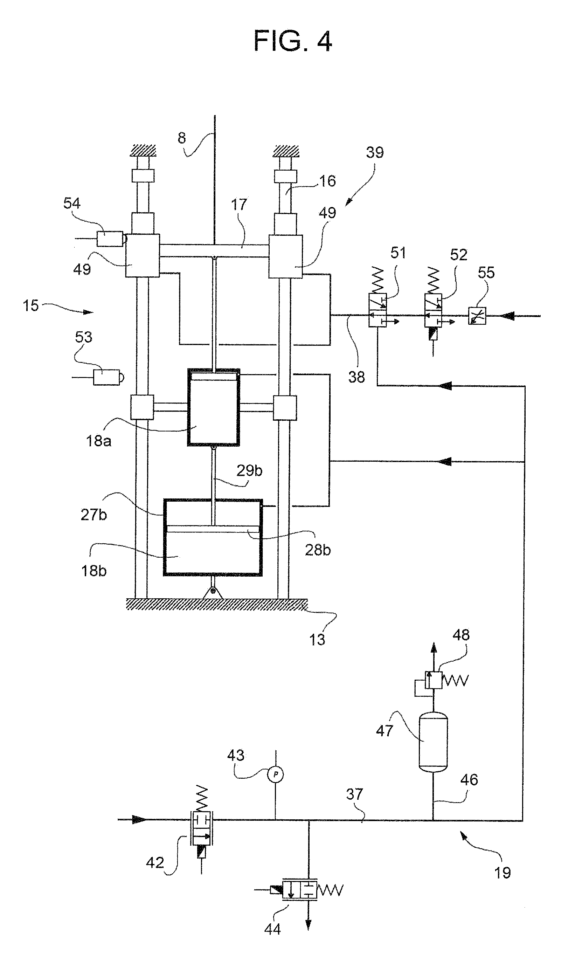

To compensate the axial pull on fuel element 4 as it is engaged and hoisted by pickup device 2, second (bottom) device 18b intervenes as shown in Figure 4.

Bottom device 18b is configured (i.e. designed and supplied with operating fluid) to keep the maximum tension of cable 8 below a given maximum value Tₘₐₓ. When the tension of cable 8 exceeds this limit, piston 28b slides up, as shown in Figure 4, thus pushing up cylinder 27a and device 18a as a whole, to keep the overall tension of cable 8 below the given maximum value. When hoisting fuel element 4, compensating device 15 thus limits pull to prevent the tension on cable 8 from increasing to such an extent as to snap the cable.

The upward movement of piston 28b and device 18a pushes slide 17 up along frame 16, until it eventually activates microswitch 54 to stop hoisting system 5, i.e. winch 9.

Safety lock system 39 intervenes when necessary.

During normal operation of device 15, control valve 51 is open and connects secondary branch 38 to main branch 37 of circuit 19; and the operating fluid (compressed air) pressure in circuit 19 is such as to keep locking devices 49 open (in the release position), so slide 17 is free to move on frame 16.

When the operating fluid pressure in circuit 19 falls and is no longer sufficient to keep locking devices 49 open, these switch automatically back to the lock position to lock slide 17.

Control valve 51 is preferably a normally-open, two-position, three-way direction control valve, and is controlled by operating fluid from main branch 37, which also controls piston devices 18.

Control valve 52 performs the same function as control valve 51, but is controlled electrically by the control system in the event of mechanical failure detected by load sensor 31.

Safety lock system 39, in fact, also intervenes in the event of mechanical failure of a component part of compensating device 15 beneath slide 17. Mechanical failure is monitored by load sensor 31, which is installed at a point subjected at any operating time to the tension of cable 8. In the event of mechanical failure of compensating device 15, load sensor 31 detects a zero resisting force, and opens control valve 52 to reduce the pressure in circuit 19 and close locking devices 49.

Alternatively, system 39 may be controlled by an adjustable-release valve 55 installed along secondary branch 38 and operated by the control system.

Obviously, in addition to or instead of load sensor 31, system 39 may be operated by any other type of sensor capable of detecting failure and/or malfunctions.

All the valves in circuit 19 may be on/off, as opposed to proportional, types.

Clearly, changes may be made to the system as described and illustrated herein without, however, departing from the scope of the accompanying Claims.

## Claims

1. A load compensating device (15) for a nuclear fuel element handling machine, extending substantially along an axis (X), and comprising : a frame (16) adapted to be fitted to a fixed supporting structure (13); a slide (17), which slides, parallel to the axis (X), along the frame (16), and is adapted to be connected to a hoisting member (6) such as a cable; a first and second fluid-operated piston device (18) connected mechanically in series to each other and to the slide (17); and an operating fluid feed circuit (19) for parallel-feeding operating fluid to the piston devices (18);
**characterized in that**
the load compensating device further comprises a safety lock system (39), which operates on the slide (17) to selectively lock and release the slide (17) to prevent and permit travel of the slide (17) along the frame (16); the safety lock system (39) being connected to a secondary branch (38) of the circuit (19) branching off from a main branch (37) of the circuit (19) feeding the piston devices (18).

2. A device as claimed in Claim 1, wherein the piston devices (18) are located one over the other along the axis (X); the first piston device (18a) being located between the second piston device (18b) and the slide (17); and the second piston device (18b) being connected to the fixed supporting structure (13).

3. A device as claimed in Claim 1 or 2, wherein the first piston device (18a) is designed to keep the tension of the hoisting member (6) above a given minimum value (Tₘᵢₙ); and the second piston device (18b) is designed to keep the maximum tension of the hoisting member (6) below a given maximum value (Tₘₐₓ).

4. A device as claimed in one of the foregoing Claims, wherein the piston devices (18) comprise respective pistons (28) which slide in respective cylinders (27); and wherein the cylinder (27a) of the first piston device (18a) is free to slide with respect to the frame (16) and is connected to the supporting structure (13) by the second piston device (18b); and the cylinder (27b) of the second piston device (18b) is fixed to the supporting structure (13).

5. A device as claimed in Claim 4, wherein the cylinder (27b) of the second piston device (18b) is fixed to the supporting structure (13) by a connector (30) with a load sensor (31).

6. A device as claimed in Claim 4 or 5, wherein the circuit (19) comprises a main branch (37), which parallel-connects respective chambers (34) of the cylinders (27) to a compressed operating fluid source, so the chambers (34) are at a common given pressure.

7. A device as claimed in Claim 6, wherein each piston (28) defines, in the respective cylinder (27), a top chamber (34) housing a rod (29) of the piston (28); and a bottom chamber (35); and the main branch (37) parallel-connects the top chambers (34).

8. A device as claimed in one of the foregoing Claims, wherein the circuit (19) comprises at least one control valve (42, 44) controlled by a control system on the basis of the pressure of the circuit (19) recorded by a gauge (43).

9. A device as claimed in Claim 8, wherein the circuit (19) comprises a first control valve (42) for increasing the pressure of the circuit (19) by connecting the circuit (19) to the compressed operating fluid source; and a second control valve (44) for reducing the pressure of the circuit (19).

10. A device as claimed in one of the foregoing Claims, wherein the circuit (19) comprises a storage tank (47) designed to allow predetermined variations in the pressure of the circuit (19), and fitted optionally with a safety valve (48).

11. A device as claimed in one of the foregoing Claims, wherein the safety lock system (39) comprises one or more, e.g. conical, locking devices (49), which are normally closed in a lock position connecting the slide (17) integrally to the frame (16), and are switched by an actuating device (50) to a release position allowing travel of the slide (17) along guides (24).

12. A device as claimed in Claim 11, wherein the actuating device (50) is fluid-operated, and comprises said secondary branch (38) of the circuit (19), and at least one auxiliary control valve (51, 52) along the secondary branch (38).

13. A device as claimed in Claim 12, wherein the locking devices (49) are kept in the release position by the operating fluid in the circuit (19); and opening/closing of the locking devices (49) is controlled by said at least one auxiliary control valve (51, 52).

14. A device as claimed in Claim 13, wherein a first auxiliary control valve (51) is controlled by the operating fluid in the circuit (19); and a second auxiliary control valve (52) is controlled electrically by a control system.

15. A nuclear reactor fuel element handling machine (1) comprising a pickup device (2) with a gripper (3) for gripping a fuel element (4); a hoisting member (6) connected to the pickup device (2); and a pull assembly (7) for moving the hoisting member (6); the hoisting member (6) having one end (12) connected to a fixed supporting structure (13) by a load compensating device (15); and the machine being **characterized in that** the load compensating device (15) is as claimed in one of the foregoing Claims.

## Patentansprüche

1. Eine Ladungskompensationsvorrichtung (15) für eine Maschine zur Handhabung von Kernbrennstoffelementen, die sich im Wesentlichen entlang einer Achse (X) erstreckt und aufweist: einen Rahmen (16), der zur Einpassung in eine ortsfeste Trägerstruktur (13) ausgebildet ist; einen Schlitten (17), der parallel zu der Achse (X) entlang des Rahmens (16) verschiebbar ist und zur Verbindung mit einem Förderteil (6), beispielsweise einem Kabel, ausgebildet ist; eine erste und zweite fluidbetätigte Kolbeneinrichtung (18), die in Reihe miteinander und mit dem Schlitten (17) mechanisch verbunden sind; und einen Betriebsfluidförderkreislauf zum parallelen Fördern von Betriebsfluid zu den Kolbeneinrichtungen (18);
**dadurch gekennzeichnet,**
**dass** die Ladungskompensationsvorrichtung weiterhin aufweist
ein Sicherheitsblockiersystem (39), das auf dem Schlitten (17) zum wahlweisen Verschließen oder Freigeben des Schlittens (17) betrieben wird, um die Bewegung des Schlittens (17) entlang des Rahmens (16) zu verhindern und zu erlauben; wobei das Sicherheitsblockiersystem (39) mit einem Sekundärzweig (38) des Kreislaufs (19) verbunden ist, der von einem Hauptzweig (37) des Kreislaufs (19) zum Versorgen der Kolbeneinrichtungen (18) abzweigt.

2. Eine Vorrichtung nach Anspruch 1, wobei die Kolbeneinrichtungen (18) entlang der Achse (X) übereinander angeordnet sind; die erste Kolbeneinrichtung (18a) zwischen der zweiten Kolbeneinrichtung (18b) und dem Schlitten (17) angeordnet ist; und die zweite Kolbeneinrichtung (18b) mit der ortsfesten Trägerstruktur (13) verbunden ist.

3. Eine Einrichtung nach Anspruch 1 oder 2, wobei die erste Kolbeneinrichtung (18a) zur Aufrechterhaltung der Spannung des Förderteils (6) oberhalb eines vorgegebenen Minimalwertes (Tₘᵢₙ) ausgebildet ist; und die zweite Kolbeneinrichtung (18b) zur Aufrechterhaltung der maximalen Spannung des Fördermittels unterhalb eines vorgegebenen Maximalwertes (Tₘₐₓ) ausgebildet ist.

4. Eine Einrichtung nach einem der vorhergehenden Ansprüche, wobei die Kolbeneinrichtungen (18) jeweils Kolben (28) aufweisen, die jeweils in Zylindern (27) bewegbar sind; und wobei der Zylinder (27a) der ersten Kolbeneinrichtung (18a) bezüglich des Rahmens (16) frei bewegbar ist und durch die zweite Kolbeneinrichtung (18b) mit der Trägerstruktur (3) verbunden ist; und der Zylinder (27b) der zweiten Kolbeneinrichtung (18b) an der Trägerstruktur (13) befestigt ist.

5. Eine Einrichtung nach Anspruch 4, **dadurch gekennzeichnet, dass** der Zylinder (26b) der zweiten Kolbeneinrichtung (18b) an der Trägerstruktur (13) durch einen Verbinder (30) mit einem Kraftaufnehmer (31) befestigt ist.

6. Eine Einrichtung nach Anspruch 4 oder 5, wobei der Kreislauf (19) einen Hauptzweig (37) aufweist, der parallel die jeweiligen Kammern (30) der Zylinder (27) mit einer Druckmittelquelle verbindet, so dass die Kammern (34) mit dem gleichen vorgegebenen Druck beaufschlagt werden.

7. Eine Einrichtung nach Anspruch 6, wobei der Kolben (28) in dem jeweiligen Zylinder (27) eine obere Kammer (34), die eine Stange (29) des Kolbens (28) aufnimmt, und eine Bodenkammer (35) definiert; und der Hauptzweig (37) die oberen Kammern (34) parallel verbindet.

8. Eine Einrichtung nach einem der vorhergehenden Ansprüche, wobei der Kreislauf (19) wenigstens ein Steuerventil (42, 44) aufweist, das von einem Steuersystem auf der Grundlage des Drucks des Kreislaufs (19) gesteuert wird, der von einem Messinstrument (43) gemessen wird.

9. Eine Einrichtung nach Anspruch 8, wobei der Kreislauf (19) ein erstes Steuerventil (42) zur Vergrößerung des Drucks des Kreislaufs (19) durch Verbinden des Kreislaufs (19) mit der Druckmittelquelle und ein zweites Steuerventil (44) zur Reduzierung des Drucks des Kreislaufs (19) aufweist.

10. Eine Vorrichtung nach einem der vorhergehenden Ansprüche, wobei der Kreislauf (19) einen Speichertank (47) aufweist, der derart ausgebildet ist, dass dieser vorgegebene Druckänderungen des Kreislaufs (19) erlaubt, und optional mit einem Sicherheitsventil (48) ausgestattet ist.

11. Eine Vorrichtung nach einem der vorhergehenden Ansprüche, wobei das Sicherheitsblockiersystem (39) eine oder mehrere, beispielsweise konische, Blockiervorrichtungen (49) aufweist, die im Normalzustand in einer Blockierposition verriegelt sind, in der der Schlitten (17) integral mit dem Rahmen (16) verbunden ist, und durch eine Betätigungseinrichtung (50) in eine freigegebene Position umgeschaltet werden, in der der Schlitten entlang von Führungen (24) verschiebbar ist.

12. Eine Vorrichtung nach Anspruch 11, wobei die Betätigungseinrichtung (50) fluidbetätigt ist, und den Sekundärzweig (38) des Kreislaufs (19) und wenigstens ein Hilfs-Steuerventil (51, 52) entlang des Sekundärzweigs (38) aufweist.

13. Eine Vorrichtung nach Anspruch 12, wobei die Blockiervorrichtungen (49) durch das Betriebsfluid in dem Kreislauf (19) in der freigegebenen Position gehalten werden; und das Öffnen/Verriegeln der Blockiervorrichtungen (49) durch das wenigstens eine Hilfs-Steuerventil (51, 52) gesteuert wird.

14. Eine Vorrichtung nach Anspruch 13, wobei ein erstes Hilfs-Steuerventil (51) durch das Betriebsfluid in dem Schaltkreis (19) gesteuert wird; und ein zweites Hilfs-Steuerventil (52) elektrisch durch ein Steuersystem gesteuert wird.

15. Eine Maschine zur Handhabung von Kernstoffbrennelementen mit einer Aufnahmeeinrichtung (2) mit einem Greifer (3) zum Greifen eines Brennelements (4); einem mit der Aufnahmeeinrichtung (2) verbundenen Förderteil (6); und einer Zugeinrichtung (7) zum Bewegen des Förderteils (6); wobei das Förderteil (6) ein Ende (12) hat, das durch eine Lastkompensationseinrichtung (15) mit einer ortsfesten Trägerstruktur (13) verbunden ist; und die Maschine durch die Lastkompensationsvorrichtung (15) nach einem der vorhergehenden Ansprüche gekennzeichnet ist.

## Revendications

1. Dispositif de compensation de charge (15) pour une machine de manipulation d'éléments de combustible nucléaire, s'étendant sensiblement le long d'un axe (X) et comprenant : un châssis (16) adapté pour être monté sur une structure de support fixe (13) ; une glissière (17) qui coulisse, parallèlement à l'axe (X), le long du châssis (16) et est adaptée pour être raccordée à un élément de levage (6) tel qu'un câble ; un premier et un second dispositif à piston à commande hydraulique (18) raccordés mécaniquement en série entre eux et à la glissière (17) ; et un circuit d'alimentation de fluide opérationnel (19) pour amener un fluide opérationnel en parallèle aux dispositifs à piston (18);
**caractérisé en ce que** :
le dispositif de compensation de charge comprend en outre un système de blocage de sécurité (39) qui agit sur la glissière (17) pour bloquer et débloquer sélectivement la glissière (17) afin d'empêcher et de permettre le déplacement de la glissière (17) le long du châssis (16) ; le système de blocage de sécurité (39) étant raccordé à une branche secondaire (38) du circuit (19) s'écartant d'une branche principale (37) du circuit (19) alimentant les dispositifs à piston (18).

2. Dispositif selon la revendication 1, dans lequel les dispositifs à piston (18) sont positionnés l'un sur l'autre le long de l'axe (X) ; le premier dispositif à piston (18a) étant positionné entre le second dispositif à piston (18b) et la glissière (17) ; et le second dispositif à piston (18b) étant raccordé à la structure de support fixe (13).

3. Dispositif selon la revendication 1 ou 2, dans lequel le premier dispositif à piston (18a) est conçu pour maintenir la tension de l'élément de levage (6) au-dessus d'une valeur minimum donnée (Tₘᵢₙ) ; et le second dispositif à piston (18b) est conçu pour maintenir la tension maximale de l'élément de levage (6) au-dessous d'une valeur maximum donnée (Tₘₐₓ).

4. Dispositif selon l'une des revendications précédentes, dans lequel les dispositifs à piston (18) comprennent des pistons (28) respectifs qui coulissent dans des cylindres (27) respectifs ; et dans lequel le cylindre (27a) du premier dispositif à piston (18a) est libre de coulisser par rapport au châssis (16) et est raccordé à la structure de support (13) par le second dispositif à piston (18b) ; et le cylindre (27b) du second dispositif à piston (18b) est fixé à la structure de support (13).

5. Dispositif selon la revendication 4, dans lequel le cylindre (27b) du second dispositif à piston (18b) est fixé à la structure de support (13) par un connecteur (30) avec un capteur de charge (31).

6. Dispositif selon la revendication 4 ou 5, dans lequel le circuit (19) comprend une branche principale (37) qui raccorde en parallèle des chambres (34) respectives des cylindres (27) à une source de fluide opérationnel sous pression, de sorte que les chambres (34) sont à une pression commune donnée.

7. Dispositif selon la revendication 6, dans lequel chaque piston (28) définit, dans le cylindre (27) respectif, une chambre supérieure (34) logeant une tige (29) du piston (28) ; et une chambre inférieure (35) ; et la branche principale (37) raccorde en parallèle les chambres supérieures (34).

8. Dispositif selon l'une des revendications précédentes, dans lequel le circuit (19) comprend au moins une soupape de commande (42, 44) commandée par un système de commande sur la base de la pression du circuit (19) enregistrée par un manomètre (43).

9. Dispositif selon la revendication 8, dans lequel le circuit (19) comprend une première soupape de commande (42) pour augmenter la pression du circuit (19) en raccordant le circuit (19) à la source de fluide opérationnel sous pression; et une seconde soupape de commande (44) pour réduire la pression du circuit (19).

10. Dispositif selon l'une des revendications précédentes, dans lequel le circuit (19) comprend un réservoir de stockage (47) conçu pour permettre des variations prédéterminées de pression dans le circuit (19), et facultativement équipé d'une soupape de sécurité (48).

11. Dispositif selon l'une des revendications précédentes, dans lequel le système de blocage de sécurité (39) comprend un ou plusieurs dispositifs de blocage (49), par exemple coniques, qui sont normalement fermés dans une position de blocage raccordant la glissière (17) de manière solidaire au châssis (16), et sont amenés, par un dispositif d'actionnement (50), dans une position de déblocage permettant le déplacement de la glissière (17) le long de guides (24).

12. Dispositif selon la revendication 11, dans lequel le dispositif d'actionnement (50) est actionné par fluide, et comprend ladite branche secondaire (38) du circuit (19) et au moins une soupape de commande auxiliaire (51, 52) le long de la branche secondaire (38).

13. Dispositif selon la revendication 12, dans lequel les dispositifs de blocage (49) sont maintenus dans la position de déblocage par le fluide opérationnel dans le circuit (19) ; et l'ouverture / la fermeture des dispositifs de blocage (49) est commandée par ladite au moins une soupape de commande auxiliaire (51, 52).

14. Dispositif selon la revendication 13, dans lequel une première soupape de commande auxiliaire (51) est commandée par le fluide opérationnel dans le circuit (19) ; et une seconde soupape de commande auxiliaire (52) est commandée électriquement par un système de commande.

15. Machine de manipulation d'éléments de combustible (1) d'un réacteur nucléaire comprenant un dispositif de prise (2) avec une pince (3) pour saisir un élément de combustible (4) ; un élément de levage (6) raccordé au dispositif de prise (2) ; et un ensemble de traction (7) pour déplacer l'élément de levage (6) ; l'élément de levage (6) ayant une extrémité (12) raccordée à une structure de support fixe (13) par un dispositif de compensation de charge (15) ; et la machine étant **caractérisée en ce que** le dispositif de compensation de charge (15) est selon l'une des revendications précédentes.
